# EUROPÄISCHE PATENTSCHRIFT

(11) **EP 3 535 378 B1**
(45) Veröffentlichungstag und Bekanntmachung des Hinweises auf die Patenterteilung: **23.10.2024**
(21) Anmeldenummer: 17803821.2
(22) Anmeldetag: 07.11.2017
(51) Int. Cl.: C12C 3/08, C12C 7/20, C12C 7/24, C12C 13/00, C12C 7/28, C12C 3/12

(54) **VORRICHTUNG UND VERFAHREN ZUR EXTRAKTION VON AROMASTOFFEN AUS PFLANZLICHEN AROMATRÄGERN IN EINER BRAUFLÜSSIGKEIT**
APPARATUS AND PROCESS FOR EXTRACTION OF AROMA CHEMICALS FROM VEGETABLE AROMA CARRIERS IN A BREWING LIQUID
SYSTÈME ET PROCÉDÉ D'EXTRACTION DE SUBSTANCES AROMATIQUES DE SOURCES VÉGÉTALES D'ARÔMES CONTENUES DANS UN LIQUIDE DE BRASSAGE

(30) Priorität: 07.11.2016 DE 102016121249
(43) Veröffentlichungstag der Anmeldung: 11.09.2019
(73) Patentinhaber: GEA Brewery Systems GmbH, 97318 Kitzingen (DE)
(72) Erfinder: SCHELLER, Ludwig, 97318 Kitzingen (DE)
(74) Vertreter: advotec.
(86) Internationale Anmeldenummer: PCT/EP2017/078404
(87) Internationale Veröffentlichungsnummer: WO 2018/083324

(56) Entgegenhaltungen:
- WO-A1-2009/083205
- WO-A1-2012/142988
- DE-A1- 102008 017 539
- DE-A1- 102009 023 247
- DE-B3- 102015 101 518
- GB-A- 703 648

## Beschreibung

Die Erfindung betrifft eine Vorrichtung zur Extraktion von Aromastoffen aus Hopfen und/oder Hopfenprodukten, insbesondere aus festen Hopfenprodukten, beispielsweise Hopfenpellets, in eine Brauflüssigkeit nach dem Oberbegriff des Anspruchs 1. Weiter betrifft die Erfindung ein Verfahren zur Extraktion von Aromastoffen aus Hopfen und/oder Hopfenprodukten, wobei in der Bierherstellung Hopfen und/oder Hopfenprodukte als Aromaträger eingesetzt werden, in eine Brauflüssigkeit.

Gattungsgemäße Vorrichtungen und Verfahren werden beim Brauen von Bier zur Abtrennung von Feststoffen aus Hopfenprodukten bei der Hopfung von Würze und von Bier eingesetzt, was in allen Stufen der Bierherstellung erfolgen kann. Diese so genannte Aromahopfung kann mittels der heißen Brauflüssigkeit als so genannte Heißhopfung oder auch nach der Gärung im fertigen Bier als so genannte Kalthopfung (auch als dryhopping oder Hopfenstopfen bekannt) erfolgen.

Bei der Herstellung von Bier wird während der Würzeherstellung Hopfen zur Würze hinzugegeben. Dies wird auch Heißhopfung genannt. Der Hopfen hat hierbei unter anderem die Aufgabe, dem Bier eine Bitternote und ein Hopfenaroma zu geben. Handelsüblich werden hierfür Hopfenpellets, die Feststoffe enthalten, Hopfenextrakt oder auch Naturhopfen verwendet. Bei der Hopfung im Heißprozess, also während des Sudhausprozesses, wird der Hopfen in der Regel während der Würzekochung zugegeben. Zur Betonung des Hopfenaromas kann der Hopfen auch während oder nach der Heißtrubabscheidung, also im oder nach dem Whirlpool und vor dem Würzekühler, zugegeben werden. Hierdurch wird vermieden, dass die flüchtigen Hopfenaromen wieder ausdampfen und sich verflüchtigen.

Aufgrund geänderter Verbraucherwünsche wird zunehmend Bier mit stark betontem Hopfenaroma im Markt gewünscht. Um dies zu erreichen, werden die Biere zunehmend auch kaltgehopft. Hierbei wird dem Bier im Kaltbereich, bevorzugt nach der Gärung, Hopfen zugegeben. Dies wird als Kalthopfung bezeichnet. Hierfür werden in der Regel Hopfenpellets, Hopfenpulver oder Naturhopfen verwendet.

Sowohl im Heißbereich als auch im Kaltbereich ist es bei Verwendung von festen Hopfenprodukten, insbesondere Hopfenpellets, insbesondere nachteilig, dass nach der Extraktion der Inhaltsstoffe große Mengen von Rückständen, die so genannten Hopfentreber oder Hopfentrübstoffe, in der Würze bzw. im Bier zurückbleiben. Diese festen Rückstände müssen wieder abgetrennt werden, da sie in den nachfolgenden Prozessen und im fertigen Bier unerwünscht sind.

Im Heißbereich, bei der Hopfengabe während der Würzekochung, erfolgt diese Abscheidung anschließend im Whirlpool oder mittels Zentrifuge, wodurch Hopfentrübstoffe, zusammen mit dem Eiweißtrub, nämlich dem Heißtrub, abgeschieden werden.

Um dabei eine gute Abscheidung zu erzielen, muss der Whirlpool über eine ausreichend große Abscheidefläche verfügen, um den Hopfentrub aufnehmen und abscheiden zu können. Bei Bieren mit großen Hopfenmengen sind die Whirlpool-Gefäße dann entsprechend größer zu dimensionieren, was zusätzliche Investitionskosten und auch größere Verluste an Würze bringt.

Bei der Kalthopfung wird der Hopfentreber durch Filtration oder Separation wieder abgeschieden, was allerdings zusätzliche Kosten verursacht, da die zusätzlichen Trübstoffe in der Regel die Kapazität bzw. Leistung des Filters deutlich reduzieren bzw. die Investition in eine gegebenenfalls spezielle Zentrifuge erforderlich wird. Auch liegen die Hopfentrübstoffe teilweise sehr kompakt im Gärtank, so dass sie nur schwer entfernt werden können.

Aus der DE 10 2013 101 435 A1 ist eine Vorrichtung und ein Verfahren zur Extraktion von Aromastoffen aus pflanzlichen Aromaträgern in eine Brauflüssigkeit bekannt. Als Feststoff-Abscheidevorrichtung zur Abscheidung der unlöslichen Hopfentrübstoffe wird hierbei entweder ein Hydrozyklon oder ein Filter, insbesondere ein Spaltsiebfilter, verwendet. Nachteilig an der Verwendung eines Hydrozyklons ist dabei, dass die Kapazität des Hydrozyklons nur sehr aufwendig auf die jeweils notwendigen Kapazitäten bei der Hopfentrubabscheidung abgestimmt werden kann. Da der Hydrozyklon auf komplexen strömungsmechanischen Wirkprinzipien beruht, kann die Dimensionierung des Hydrozyklons nicht ohne weiteres abhängig von der jeweils notwendigen Kapazität zur Hopfentrubabscheidung abgestimmt bzw. verändert werden. Die Verwendung eines Filters zur Hopfentrubabscheidung hat den Nachteil, dass diese Filter, insbesondere Siebfilter, sehr leicht zugesetzt werden und dann für eine weitere Nutzung aufwendig gereinigt werden müssen.

Aus der DE 10 2015 101 518 B3 ist eine gattungsgemäße Vorrichtung und ein gattungsgemäßes Verfahren zur Extraktion von Aromastoffen aus pflanzlichen Aromaträgern in eine Brauflüssigkeit unter Einsatz einer Feststoff-Abscheidevorrichtung bekannt.

Die DE 10 2009 023 247 A1 betrifft ein Brauverfahren, wobei aus einer Maische eine Würze gewonnen, die Würze anschließend einer Temperaturbehandlung unterzogen, aus der behandelten Würze der Heißtrub abgeschieden, und nach der Heißtrubabscheidung aus der Würze durch eine Gärung Bier gewonnen wird. Die Erfindung beschäftigt sich insbesondere damit, wie die Ausbeute aus Hopfenprodukten im Zuge eines Bierbereitungsprozesses gesteigert werden kann.

Aus der WO 2012/142988 A1 ist ein Verfahren zur Hopfengabe bei der Bierherstellung bekannt, mit dem die im Hopfenextrakt enthaltenen Inhaltsstoffe effektiv ausgenutzt werden können. Das vorgeschlagene Verfahren betrifft jedoch lediglich die Verwendung flüssiger oder pastöser Hopfenextrakte.

Die DE 10 2008 017 539 A1 betrifft ein Bier und ein Verfahren zu dessen Herstellung mit einem derart hohen Anteil an Bitterstoffen, dass es zum Mischen mit anderen Bieren verwendet werden kann, um bei diesen den Bitterstoffgehalt signifikant zu erhöhen. Der hohe Anteil an Bitterstoffen wird dabei durch Umwandlung von α-Säuren in Iso-α-Säuren unter niedriger Temperatureinwirkung über einen langen Zeitraum erzeugt.

Praxisuntersuchungen haben gezeigt, dass die Aromastoffe bei den bekannten Extraktionsverfahren nur teilweise in die Brauflüssigkeit übergeführt werden können. Insbesondere können durch die bekannten Extraktionsverfahren nicht alle lösbaren Aromastoffe, insbesondere die im Aromaträger enthaltenen Aromaöle, gelöst und in die Brauflüssigkeit übergeführt werden. Eine Überführung und Nutzbarmachung der in den Aromaträgern vorhandenen Bitterstoffe gelingt durch die bekannte Schwebebettextraktion dagegen nur unzureichend. Somit entstehen immer Verluste an wertvoller α-Säure, die bei der Kalthopfung nicht genutzt werden können und bisher mit dem Hopfentreber entsorgt wurden.

Aufgabe der vorliegenden Erfindung ist es deshalb, eine neue Vorrichtung und ein neues Verfahren zur Extraktion von Aromastoffen aus Hopfen und/oder Hopfenprodukten als pflanzliche Aromaträger, in eine Brauflüssigkeit vorzuschlagen, mit denen die oben beschriebenen Nachteile im Hinblick auf die Überführung und Nutzbarmachung von in den Aromaträgern vorhandenen Bitterstoffen vermieden werden.

Diese Aufgabe wird durch eine Vorrichtung bzw. ein Verfahren nach der Lehre der unabhängigen Hauptansprüche gelöst.

Vorteilhafte Ausführungsformen der Erfindung sind Gegenstand der Unteransprüche.

Die Erfindung beruht auf dem Grundgedanken, die bekannten Vorrichtungen zur Extraktion von Aromastoffen, die eine Feststoff-Abscheidevorrichtung verwenden, um eine Heizeinrichtung zu ergänzen, mit der die Suspension aus Brauflüssigkeit und Aromaträgern auf eine Isomerisierungstemperatur erhitzt werden kann. Durch diese zusätzliche Möglichkeit zur Erhitzung der Suspension auf die Isomerisierungstemperatur kann die in demals Aromaträger eingesetzten Hopfen und/oder den Hopfenprodukten enthaltene α-Säure in die als Bitterstoff in Bieren erwünschte Iso-α-Säure umgewandelt werden. Dies bedeutet mit anderen Worten, dass durch die zusätzliche Wärmebehandlung unter Verwendung der ergänzten Heizeinrichtung vermehrt Iso-α-Säuren in der Suspension aus Brauflüssigkeit und Hopfen und/oder Hopfenprodukten gebildet werden kann, so dass diese erwünschten Bitterstoffe anschließend in den Brauprozess übergeführt werden können. Versuche haben gezeigt, dass bei der Isomerisierung der Bitterstoffe eine zu lange Wärmeeinwirkung wiederum negative Abbauprozesse der Bitterstoffe bewirken kann. Insofern ist es für den optimalen Erfolg der Isomerisierung erforderlich, dass die Isomerisierungstemperatur nach einer bestimmten Einwirkdauer auch wieder unterschritten wird. Um dies zu erreichen, ist die Vorrichtung zusätzlich mit einer Kühleinrichtung ausgestattet. Diese Kühleinrichtung dient dann dazu, die Suspension aus Brauflüssigkeit und Hopfen und/oder Hopfenprdoukten nach der Isomerisierung auf eine Kühltemperatur unterhalb der Isomerisierungstemperatur abzukühlen.

Welche Art von Feststoff-Abscheidevorrichtung zur Durchführung der Extraktion verwendet wird, ist grundsätzlich beliebig. Hierzu sind unterschiedliche Feststoff-Abscheidevorrichtungen bekannt. Besonders effektiv und kostengünstig ist die Extraktion unter Verwendung eines Schwebebettextraktors. Der Schwebebettextraktor kann dazu ein Suspensionsbett aufnehmen, das aus der Brauflüssigkeit und den in dem Hopfen und/oder den Hopfenprodukten enthaltenen Feststoffpartikeln gebildet ist. Der Schwebebettextraktor weist zumindest einen Zulauf und einen Auslauf für die Brauflüssigkeit auf, wobei die Brauflüssigkeit mit einer Förderpumpe vom Zulauf durch den Schwebebettextraktor zum Auslauf gepumpt werden kann. Die Fördergeschwindigkeit der Förderpumpe wird dabei auf einen Wert eingestellt, bei dem die durchschnittliche vertikale Fördergeschwindigkeit der Brauflüssigkeit im Schwebebettextraktor kleiner ist als die durchschnittliche vertikale Sinkgeschwindigkeit der Feststoffpartikel im Schwebebettextraktor.

In welcher Art die Heizeinrichtung für die Erhitzung der Suspension konstruktiv ausgebildet ist, ist grundsätzlich beliebig. Eine besonders einfache Art der Beheizung der Suspension aus Brauflüssigkeit und Hopfen und/oder Hopfenprodukten ist es, dass ein Heizelement verwendet wird, das am Schwebebettextraktor angebracht ist. Auf diese Weise kann die im Schwebebettextraktor enthaltene Suspension durch Betrieb des Heizelements erhitzt werden, bis die Isomerisierungstemperatur erreicht bzw. überschritten ist.

Alternativ zur Erhitzung der Suspension aus Brauflüssigkeit und Hopfen und/oder Hopfenprodukten im Schwebebettextraktor kann die Vorrichtung auch zusätzlich um ein Puffergefäß ergänzt werden. In dieses Puffergefäß wird die Suspension dann nach der Extraktion von Aromastoffen, zu der der Schwebebettextraktor eingesetzt wird, übergepumpt und kann dort im Puffergefäß dann zur Isomerisierung erhitzt und/oder nach der Isomerisierung gekühlt werden. Durch das zusätzliche Puffergefäß kann der Teilprozess zur Extraktion von Aromastoffen einerseits, der im Schwebebettextraktor durchgeführt wird, und der Teilprozess zur Isomerisierung der Iso-α-Säuren im Puffergefäß andererseits voneinander getrennt durchgeführt und entkoppelt werden. Auch ist es durch die Verwendung des Puffergefäßes möglich, die nach der Isomerisierung erhaltene Brauflüssigkeit mit den darin enthaltenen Iso-α-Säuren zwischenzuspeichern.

Alternativ zur Anbringung eines Heizelements unmittelbar an dem Schwebebettextraktor bzw. unmittelbar an dem Puffergefäß können auch separate Durchlauferhitzer Verwendung finden. Dabei kann es sich beispielsweise um einen Wärmetauscher, insbesondere einen Plattenwärmetauscher, handeln. Während des Erhitzens durchströmt die Suspension den Durchlauferhitzer gegebenenfalls auch mehrfach und wird durch Wärmeübergang während des Durchlaufs aufgeheizt. Zur Beheizung des Durchlauferhitzers kann ein geeignetes Wärmeübertragungsmedium, beispielsweise Dampf oder Heißwasser, verwendet werden.

Die Bauart der Kühleinrichtung ist grundsätzlich beliebig. Eine besonders einfache Art der Kühlung der Suspension aus Brauflüssigkeit und Aromaträgern ist es, dass ein Kühlelement verwendet wird, das am Schwebebettextraktor angebracht ist. Im Hinblick auf eine möglichst effektive Kühlung der Suspension kann wiederum ein Durchlaufkühler, beispielsweise ein Wärmetauscher, insbesondere ein Plattenwärmetauscher, verwendet werden. Mittels einer Pumpe wird die Suspension dann durch den Durchlaufkühler durchgepumpt und durch Wärmeübergang auf ein Kühlmittel, beispielsweise Kaltwasser, gekühlt. Gegebenenfalls kann kaltes Brauwasser in dem Durchlaufkühler auch auf die gewünschte Brauwassertemperatur erwärmt werden.

Die Effektivität des Isomerisierungsprozesses hängt auch von der jeweils gewählten Isomerisierungstemperatur ab. Besonders effektiv erfolgt die Isomerisierung, wenn eine Isomerisierungstemperatur im Bereich höher als 120 °C gewählt wird. Derart hohe Temperaturen können in der Suspension, bei der es sich ja um eine Mischung aus Flüssigkeit und Feststoffen auf Wasserbasis handelt, jedoch nur erreicht werden, wenn die Isomerisierung unter Überdruck erfolgt, da ansonsten eine unerwünschte Verdampfung der Brauflüssigkeit erfolgt. Um eine Isomerisierung unter Überdruck ermöglichen zu können, ist es besonders vorteilhaft, wenn das zur Isomerisierung der Suspension verwendete Gefäß, also der Schwebebettextraktor oder das Puffergefäß, als Druckgefäß ausgebildet ist.

Für den Erfolg der Isomerisierung ist es weiterhin von großer Bedeutung, dass die Isomerisierungstemperatur in der Suspension möglichst homogen verteilt ist. Um dies zu erreichen, ist es besonders vorteilhaft, wenn im zur Isomerisierung verwendeten Gefäß, also im Schwebebettextraktor oder im Puffergefäß, ein Mischorgan angeordnet ist, mit dem die Suspension durchmischt werden kann. Dabei kann es sich um einen mechanischen Rührer, insbesondere einen Scherrührer, oder auch um eine Umwälzpumpe, mit der die Suspension im Gefäß umgewälzt werden kann, handeln.

Um die zusätzliche Installation einer Heizeinrichtung einsparen zu können, ist es auch möglich, eine im Sudhaus ohnehin vorhandene Heizeinrichtung für die Isomerisation der Suspension zu nutzen. Dazu kann die Heizeinrichtung in der Art eines Sudhausgefäßes, insbesondere in der Art einer Würzepfanne, ausgebildet sein. Die Vorrichtung umfasst dann eine Transferleitung, in der die Suspension aus Brauflüssigkeit und Aromaträgern nach der Extraktion von Aromastoffen in das Sudhausgefäß übergepumpt werden kann. Die Suspension aus Brauflüssigkeit und Hopfen und/oder Hopfenprodukten kann dann zur Isomerisierung im Sudhausgefäß zusammen mit der Würze gekocht werden.

Das erfindungsgemäße Verfahren beruht auf dem Grundgedanken, dass zumindest ein Teil der Suspension aus Brauflüssigkeit und Hopfen und/oder den Hopfenprodukten vor und/oder während und/oder nach Lösung der Aromastoffe in der Feststoff-Abscheidevorrichtung auf eine Isomerisierungstemperatur erhitzt wird, bei der die in dem Hopfen und/oder den Hopfenprodukten enthaltenen α-Säuren in Iso-α-Säuren umgewandelt werden. Dies bedeutet also mit anderen Worten, dass die Wärmebehandlung der Suspension vor der Durchführung des Lösungsprozesses, während der Durchführung des Lösungsprozesses oder auch nach Ende des Lösungsprozesses durchgeführt wird. Besonders bevorzugt ist es dabei allerdings, dass die Wärmebehandlung durch Beheizen der Suspension auf eine Isomerisierungstemperatur nach der Durchführung des Lösungsprozesses durchgeführt wird. Um negative Abbauprozesse bei zu lang anhaltender Wärmebehandlung der Suspension zu vermeiden, wird die Suspension nach einer bestimmten Isomerisierungsdauer auf eine Kühltemperatur unterhalb der Isomerisierungstemperatur abgekühlt.

Bevorzugt wird das erfindungsgemäße Verfahren unter Verwendung eines Schwebebettextraktors als Feststoff-Abscheidevorrichtung durchgeführt.

Um die Prozesse zur Lösung der Aromastoffe durch Einsatz des Schwebebettextraktors einerseits und zum Umbau der α-Säuren in die Iso-α-Säuren durch Wärmebehandlung zu entzerren, ist es besonders vorteilhaft, wenn dazu ein zusätzliches Puffergefäß verwendet wird. Nach ausreichender Lösung der Aromastoffe durch entsprechende Bearbeitung im Schwebebettextraktor kann die Suspension dann anschließend in ein Puffergefäß übergepumpt und dort zur Isomerisierung der Bitterstoffe erhitzt bzw. zum Abbruch des Isomerisierungsprozesses gekühlt werden.

Besonders effektiv lässt sich der Prozess zur Isomerisierung bzw. zum Abbruch der Isomerisierung gestalten, wenn die Suspension dazu im Durchlauf erhitzt oder im Durchlauf abgekühlt wird.

Eine besonders effektive Isomerisierung ergibt sich, wenn eine Isomerisierungstemperatur größer 100° C, insbesondere eine Isomerisierungstemperatur größer 120° C, gewählt wird. Die Suspension sollte dazu unter Überdruck erhitzt werden, um unerwünschte Verdampfungsprozesse zu vermeiden.

Um eine möglichst gleichmäßige Temperaturverteilung der Isomerisierungstemperatur in der Suspension zu erreichen, sollte die Suspension während der Wärmebehandlung zur Isomerisierung und/oder bei der Kühlung nach Ende der Isomerisierung mit einem Mischorgan durchmischt werden.

Aus welchen Aromastoffen die Suspension gebildet wird, ist grundsätzlich beliebig. Besonders vorteilhaft ist es, wenn als Aromaträger ein Hopfenprodukt, insbesondere Hopfenpellets, verwendet werden. Als Brauflüssigkeit sollte bevorzugt eine alkoholhaltige Brauflüssigkeit bei der Bildung der Suspension, insbesondere gärendes oder gereiftes Bier, verwendet werden.

Um die zusätzliche Installation einer Heizeinrichtung einsparen zu können, ist es auch möglich, eine im Sudhaus ohnehin vorhandene Heizeinrichtung für die Isomerisation der Suspension zu nutzen. Dazu wird nach ausreichender Lösung der Aromastoffe die verbleibende Suspension zumindest teilweise in ein Sudhausgefäß, insbesondere in eine Würzepfanne, übergepumpt. Im Sudhausgefäß wird die Suspension aus Brauflüssigkeit und Hopfen und/oder Hopfenprodukten zur Isomerisierung zusammen mit der Würze gekocht. Gegebenenfalls kann zur Zwischenspeicherung der Suspension auch ein Puffertank im Sudhaus zum Einsatz kommen, in dem die Suspension aus Brauflüssigkeit und Hopfen und/oder Hopfenprodukten gepuffert werden kann. Somit ergibt sich eine zeitliche Flexibilität zwischen Anfall der Suspension und deren Isomerisation im Sudhausgefäß.

### Es zeigen:

**Fig. 1** eine Vorrichtung zur Extraktion von Aromastoffen bei Verfahrensbeginn;
**Fig. 2** die Vorrichtung gemäß Fig. 1 bei Befüllung des Schwebebettextraktors mit Hopfenpellets;

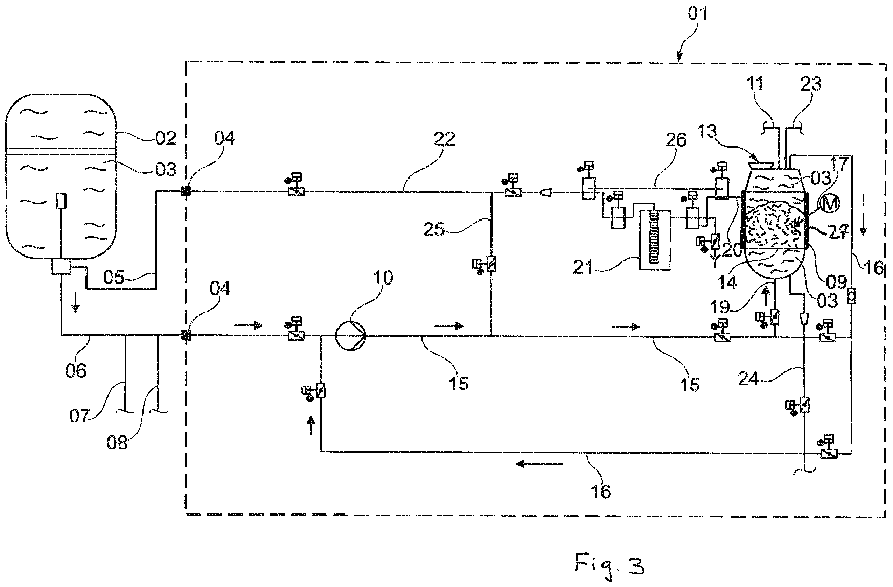

**Fig. 3** die Vorrichtung gemäß Fig. 2 bei Befüllung des Schwebebettextraktors mit Bier;
**Fig. 4** die Vorrichtung gemäß Fig. 3 bei Bildung der Suspension aus Bier und Hopfenpartikeln;
**Fig. 5** die Vorrichtung gemäß Fig. 4 beim Absetzen der Suspension aus Bier und Hopfenpartikeln am Boden des Schwebebettextraktors;
**Fig. 6** die Vorrichtung gemäß Fig. 5 während des Durchpumpens von Brauflüssigkeit durch den Schwebebettextraktor zur Lösung der lösbaren Aromastoffe in das Bier;
**Fig. 7** die Vorrichtung gemäß Fig. 6 beim Erhitzen der verbliebenen Suspension aus Brauflüssigkeit und Hopfen und/oder Hopfenprodukten auf die Isomerisierungstemperatur;
**Fig. 8** die Vorrichtung gemäß Fig. 7 beim Abziehen der Brauflüssigkeit nach der Isomerisierung;
**Fig. 9** die Vorrichtung gemäß Fig. 8 bei der Entfernung der Restsuspension aus dem Schwebebettextraktor;
**Fig. 10** die Vorrichtung gemäß Fig. 9 beim Umpumpen des Biers zur Homogenisierung der Aromastoffkonzentration.
**Fig. 11** eine zweite Ausführungsform einer erfindungsgemäßen Vorrichtung bei Bildung der Suspension aus Brauflüssigkeit und Hopfen und/oder Hopfenprodukten nach Lösung der lösbaren Aromastoffe durch Durchpumpen von Brauflüssigkeit durch den Schwebebettextraktor;
**Fig. 12** die Vorrichtung gemäß Fig. 11 beim Transfer der Suspension in ein Puffergefäß;
**Fig. 13** die Vorrichtung gemäß Fig. 12 beim Erhitzen der Suspension im Puffergefäß auf die Isomerisierungstemperatur;
**Fig. 14** die Vorrichtung gemäß Fig. 12 beim Abkühlen der Suspension im Puffergefäß auf eine Kühltemperatur unterhalb der Isomerisierungstemperatur;
**Fig. 15** eine dritte Ausführungsform einer erfindungsgemäßen Vorrichtung bei Bildung der Suspension aus Brauflüssigkeit und Hopfen und/oder den Hopfenprodukten nach Lösung der lösbaren Aromastoffe durch Durchpumpen von Brauflüssigkeit durch den Schwebebettextraktor.

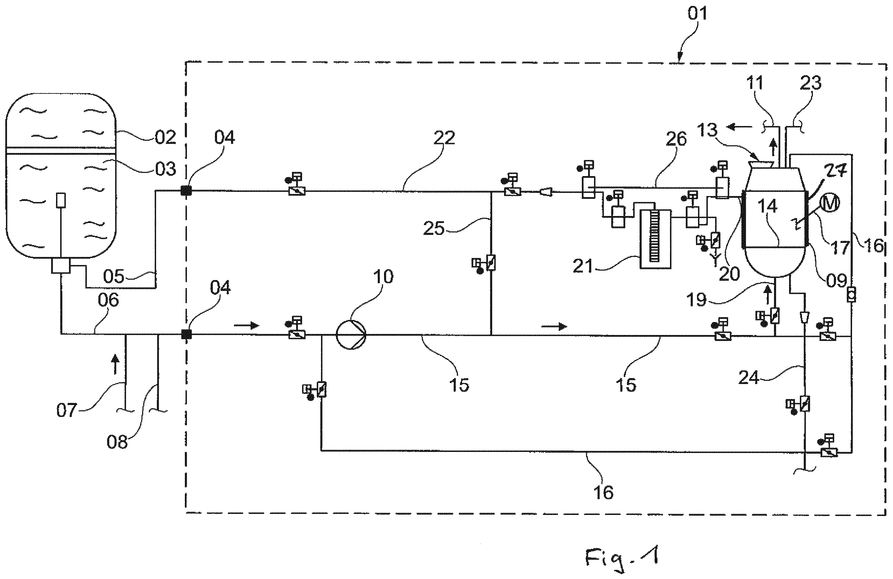

**Fig. 1** zeigt eine erfindungsgemäße Vorrichtung 01 zur Extraktion von Aromastoffen aus pflanzlichen Aromaträgern, nämlich Hopfenpellets, in eine Brauflüssigkeit, nämlich Bier. Die Vorrichtung ist in Fig. 1 lediglich schematisiert dargestellt, wobei allein die Bauteile der Vorrichtung 01 dargestellt sind, die zum Verständnis der Erfindung erforderlich sind. Die Vorrichtung 01 kann bevorzugt auf einem fahrbaren Gestell angebracht sein, um die Vorrichtung 01 mobil zu unterschiedlichen Einsatzorten bringen zu können.

Bei der in Fig. 1 dargestellten Einsatzvariante wird die Vorrichtung 01 in einem Gär- oder Lagerkeller zur Kalthopfung von Bier verwendet. Dabei wird die Vorrichtung 01 zunächst zu einem Gärtank 02 gefahren, in dem gereiftes oder noch gärendes Bier 03 gelagert ist. Der Gärtank 02 ist in Fig. 1 lediglich verkleinert dargestellt. Über Anschlusskupplungen 04 wird die Vorrichtung 01 an den Zulauf 05 und den Ablauf 06 des Gärtanks 02 angeschlossen. In den Ablauf 06 des Gärtanks 02 mündet außerdem eine CO₂-Versorgungsleitung 07 und eine Brauwasser-Versorgungsleitung 08. Alternativ können die Leitungen 07 und 08 auch direkt in die Vorrichtung 01 geleitet werden. Damit erhöht sich nur die Anzahl der Anschlüsse aus der Brauerei in die Vorrichtung 01.

Die Vorrichtung 01 besteht in ihrem Kern aus einem Schwebebettextraktor 09, durch den, angetrieben über eine regelbare Förderpumpe 10, aus diversen Rohrleitungen und verschiedenen Absperrventilen unterschiedliche Medien hindurchgepumpt werden können. Vor Beginn des eigentlichen Verfahrens zur Extraktion wird, wie in Fig. 1 dargestellt, zunächst CO₂ aus der CO₂-Versorgungsleitung 07 in die Vorrichtung 01 eingeströmt, und die verschiedenen Rohrleitungen und der Schwebebettextraktor 09 werden mit CO₂ geflutet. An der höchsten Stelle kann das CO₂ über eine Gasableitung 11 aus der Vorrichtung 01 entweichen.

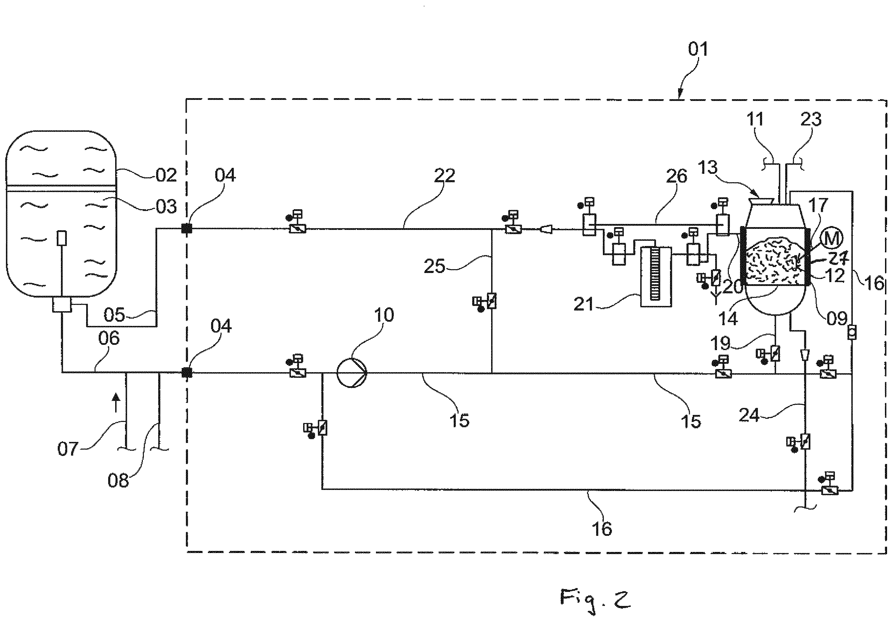

Sobald die Vorrichtung 01 mit CO₂ geflutet ist, wird, wie in Fig. 2 dargestellt, der Schwebebettextraktor zunächst mit trockenen Hopfenpellets 12 befüllt. Die Befüllung erfolgt dabei durch eine Einfüllöffnung 13. Die Hopfenpellets kommen bei der Befüllung auf einem durchströmbaren Tragelement 14, nämlich einem Siebboden, zur Auflage. Die Sieböffnungen sind dabei gerade so groß gewählt, dass die Hopfenpellets 12 nicht durch die Sieböffnungen hindurchfallen können. Zugleich kann das Tragelement 14 aber problemlos von Flüssigkeiten durchströmt werden. Die Prozessschritte CO₂-Flutung des Systems und Befüllung des Extraktors mit Hopfenpellets können auch in der Ablaufreihenfolge getauscht werden. Dies ändert nichts am erfindungsgemäßen Verfahren.

Nach der Befüllung mit Hopfenpellets wird die Vorrichtung 01 und insbesondere der Schwebebettextraktor 09 mit Bier 03 befüllt. Dazu wird das Bier aus dem Gärtank 02 durch Antrieb der Förderpumpe 10 durch den Ablauf 06 und den Vorlauf 15 von unten in den Schwebebettextraktor 09 eingepumpt, bis dieser vollständig mit Bier gefüllt ist und das Bier über eine Zirkulationsleitung 16 zurück zum Vorlauf 15 strömt. Das im System enthaltene Gas wird dabei über die Ableitung 11 aus der Vorrichtung entfernt.

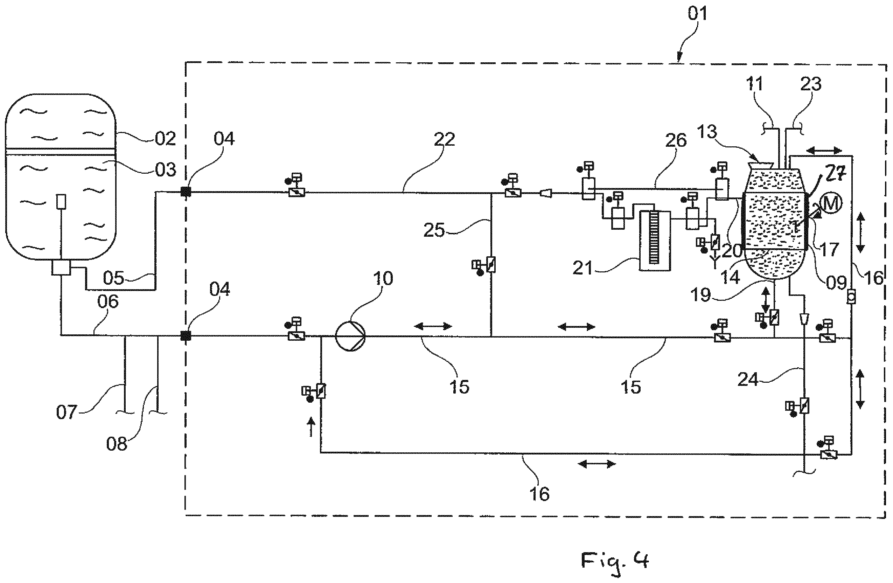

Sobald der Schwebebettextraktor 09 und die Zirkulationsleitung 16 vollständig mit Bier geflutet sind, wird der Ablauf 06 des Gärtanks 02 durch Umschalten eines Ventils von der Vorrichtung 01 getrennt und, wie in **Fig. 4** dargestellt, das Bier von der Förderpumpe 10 zirkulierend durch den Vorlauf 15 und die Zirkulationsleitung 16 umgepumpt. Durch das Umpumpen des Bieres lösen sich im Schwebebettextraktor 09 die gepressten Hopfenpellets auf, und es wird eine feine Suspension aus Hopfenpartikeln und Bier gebildet. Um die Suspensionsbildung zu erleichtern, wird die Förderrichtung der Förderpumpe 10 wiederholt umgeschaltet und dadurch das Bier mit wechselnden Förderrichtungen durch den Schwebebettextraktor 09 hindurchgefördert. Außerdem kann die Suspensionsbildung durch Antrieb eines Mischungsorgans 17, nämlich eines Leitstrahlmischers oder Scherrührers, erleichtert werden.

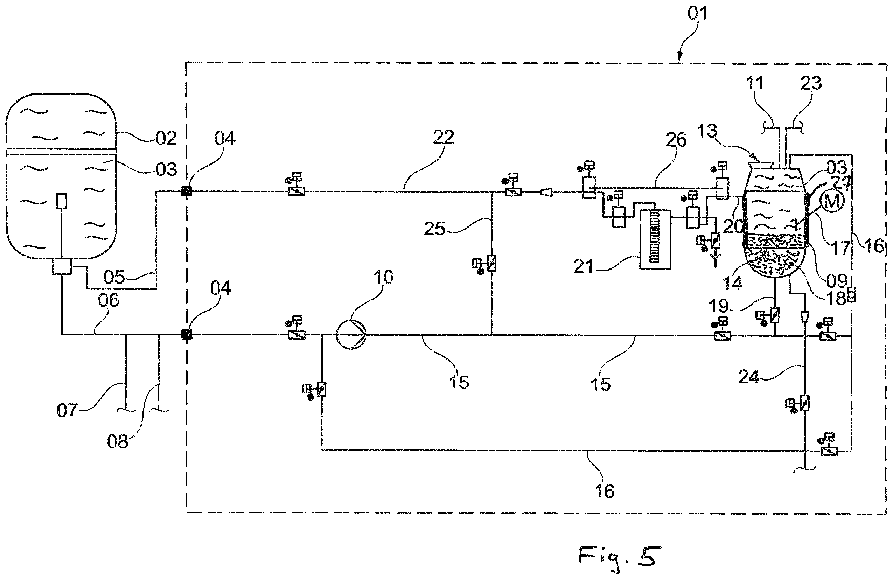

Sobald die Hopfenpellets 12 vollständig zerkleinert sind und die in den Hopfenpellets enthaltenen Hopfenpartikel zusammen mit dem Bier 03 eine fein verteilte Suspension bilden, wird, wie in Fig. 5 dargestellt, die Förderpumpe 10 kurz abgeschaltet, so dass sich am Boden des Schwebebettextraktors 09 ein Suspensionsbett 18 bilden kann. Die Höhe des Suspensionsbettes 18 sollte dabei nicht mehr als die Hälfte der Höhe des Schwebebettextraktors 09 betragen.

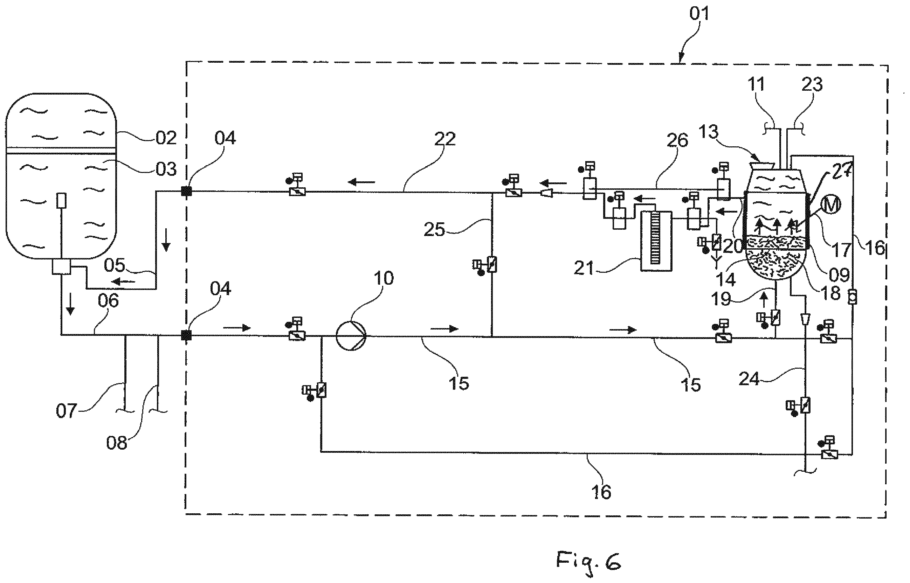

Sobald sich das Suspensionsbett 18 ausreichend beruhigt hat, wird die Zirkulationsleitung 16 geschlossen und der Ablauf 06 des Gärtanks 02 wieder durch Öffnen des entsprechenden Ventils an die Vorrichtung 01 angeschlossen. Anschließend wird, wie in Fig. 6 dargestellt, das Bier 03 aus dem Gärtank 02 durch Antrieb der Förderpumpe 10 durch den Vorlauf 15 und den Einlauf 19 von unten in den Schwebebettextraktor 09 eingepumpt. Das Bier durchströmt dann das Suspensionsbett 18 vertikal nach oben und strömt zum Auslauf 20 des Schwebebettextraktors 09. Die Fördergeschwindigkeit der Förderpumpe 10 ist dabei so gewählt, dass die durchschnittliche vertikale Strömungsgeschwindigkeit des Bieres 03 im Schwebebettextraktor 09 kleiner ist als die durchschnittliche vertikale Sinkgeschwindigkeit der Hopfenpartikel. Durch diese Geschwindigkeitsdifferenz wird erreicht, dass sich die unlöslichen Feststoffpartikel am Boden des Schwebebettextraktors 09 absetzen und gemeinsam das Suspensionsbett 18 bilden. Lediglich sehr feine Feststoffpartikel können gemeinsam mit dem Bier 03 über den Auslauf 20 aus dem Schwebebettextraktor 09 herausgefördert werden. Zur Entfernung dieser sehr feinen Feststoffpartikel durchströmt das Bier anschließend eine Feinfiltervorrichtung 21, nämlich ein rückspülbares Eckrohrsieb. Anschließend strömt das Bier dann über den Rücklauf 22 der Vorrichtung 01 zum Zulauf 05 des Gärtanks 02 und gelangt somit zurück in den Gärtank 02. Abhängig vom gewünschten Filtrationsgrad kann die Feinfiltervorrichtung 21 durch eine Bypassleitung 26 auch ganz oder teilweise umgangen werden. Diese Entscheidung obliegt dem Anwender.

Falls es prozesstechnisch möglich ist, kann die Feinfiltervorrichtung 21 auch ganz entfallen. Dann würden die feinen Feststoffpartikel in den Gärtank 02 gelangen und müssten anderweitig aus dem Bier 03 entfernt werden. Auch diese Entscheidung muss einsatzbezogen durch den Anwender fallen.

Die in **Fig. 6** dargestellte Zirkulation des Bieres 03 aus dem Gärtank 02 dient der Auslaugung der Aromastoffe aus den im Suspensionsbett 18 enthaltenen Hopfenpartikeln, wobei zugleich für eine ausreichende Trennung der flüssigen und festen Bestandteile der Suspension durch die Strömungseigenschaften des Schwebebettextraktors 09 gesorgt ist.

Grundsätzlich können die Prozessschritte zur Bildung der Suspension, wie in **Fig. 4** dargestellt, und zur Auslaugung, wie in **Fig. 6** dargestellt, auch mehrfach nacheinander durchgeführt werden, um die Auslaugung durch erneutes Aufwirbeln des Suspensionsbettes 18 weiter zu erhöhen. Zwischen den jeweiligen Prozessschritten zur Bildung der Suspension wird dann jeweils der Prozessschritt nach **Fig. 5** zum Ausbilden des Suspensionsbettes durchgeführt. Dieser Ablauf kann den Grad der Auslaugung noch weiter erhöhen.

Sobald ein ausreichender Auslaugungsgrad der Hopfenpartikel erreicht ist, wird der Ablauf 06 des Gärtanks 02 geschlossen.

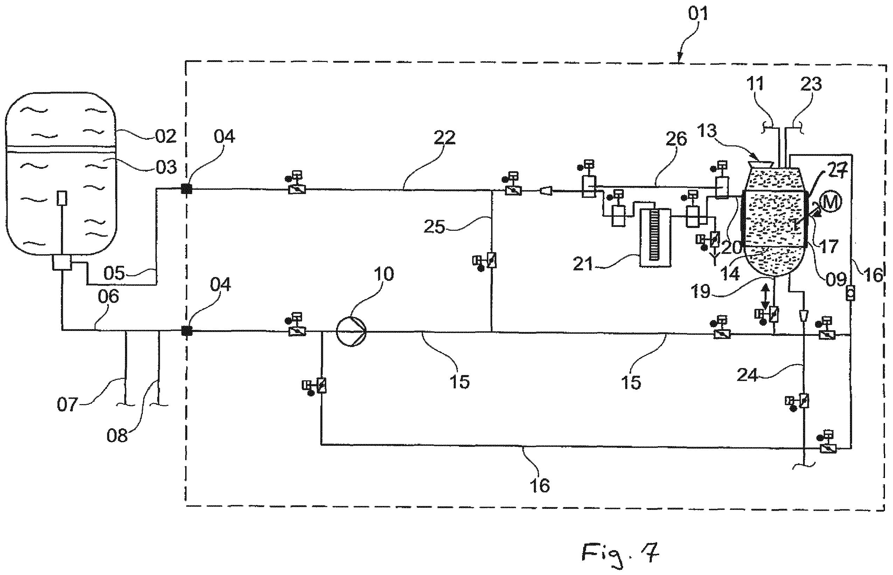

Dann wird, wie in **Fig. 7** dargestellt, durch Antrieb des Mischungsorgans 17 erneut eine Suspension im Schwebebettextraktor 09 gebildet. Zugleich mit der erneuten Suspensionsbildung wird die Suspension im Schwebebettextraktor 09 durch Betrieb eines am Mantel des Schwebebettextraktors 09 vorgesehenen Heizelements beheizt. Die Temperatur der Suspension wird maximal auf die beim herrschenden Tankdruck erreichbare Verdampfungstemperatur erhöht. Beim Erreichen der Isomerisierungstemperatur werden die in den Aromaträgern der Suspension enthaltenen α-Säuren in Iso-α-Säuren umgewandelt. Die Isomerisierung kann durch Halten der Isomerisierungstemperatur über eine bestimmte Dauer von beispielsweise 20 bis 30 Minuten in ihrer Intensität gesteuert werden.

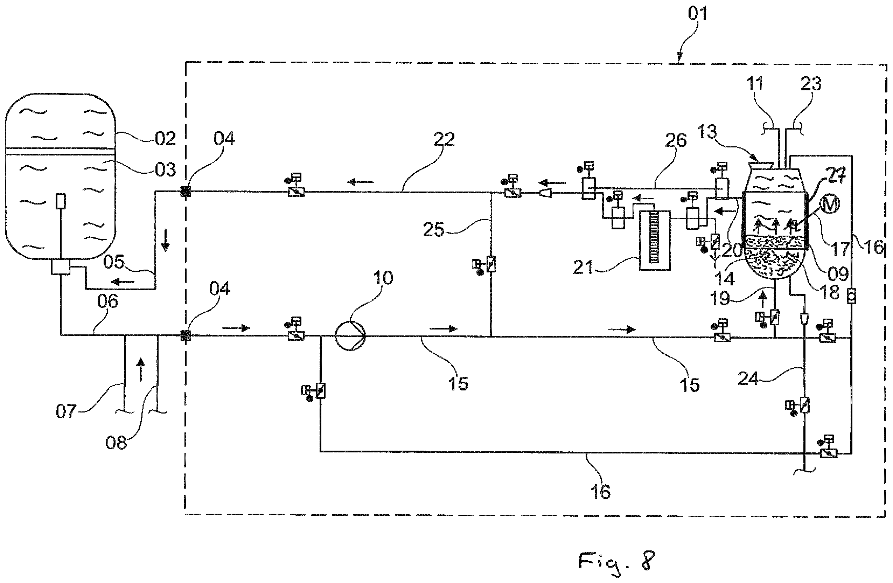

Nach der Isomerisierung wird, wie in **Fig. 8** dargestellt, Brauwasser aus der Brauwasserversorgungsleitung 08 in den Vorlauf 15 eingedrückt, um das in der Vorrichtung 01 verbliebene Bier mit den darin enthaltenen Iso-α-Säuren über den Rücklauf 22 und den Zulauf 05 des Gärtanks 02 zurück in den Gärtank 02 zu drücken. Additiv kann der Inhalt des Schwebebettextraktors vorher mittels einer nicht dargestellten Kühleinrichtung wieder abgekühlt werden.

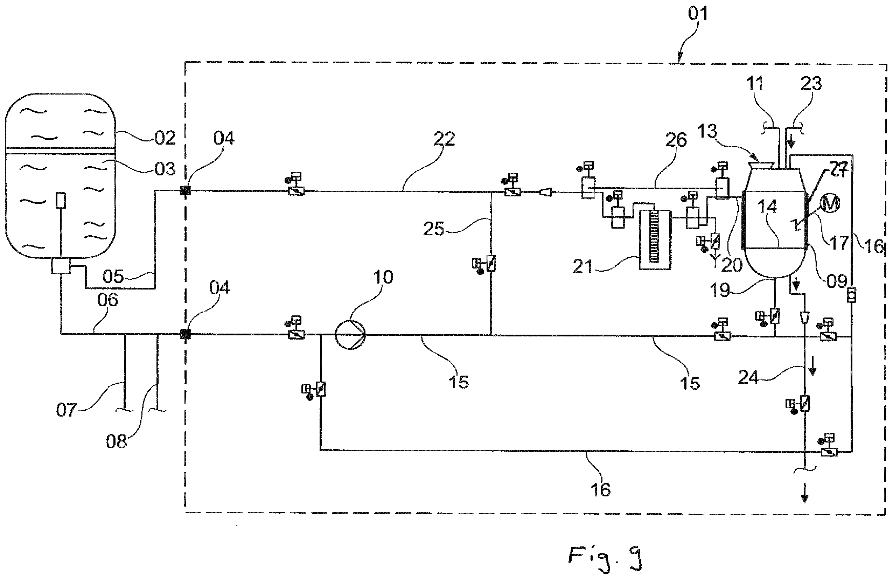

Sobald die Vorrichtung 01 vollständig vom Bier 03 geleert ist, wird, wie in **Fig. 9** dargestellt, ein geeignetes Reinigungsfluid, bevorzugt Brauwasser 08, über eine Leitung 23 in den Schwebebettextraktor 09 eingedrückt und die verbliebene Restsuspension über eine Ablaufleitung 24 in Richtung einer nicht dargestellten Abflussleitung abgeführt. Anschließend kann die gesamte Anlage mittels einer in den Zeichnungen nicht dargestellten CIP-Reinigungsvorrichtung maschinell gereinigt werden.

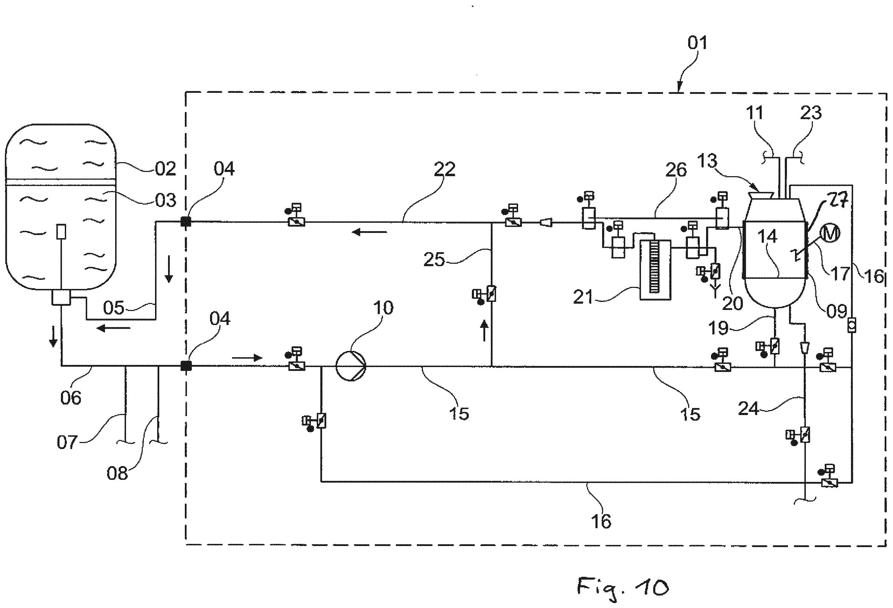

Um die Konzentration der im Bier 03 gelösten Aromastoffe zu homogenisieren, kann das Bier 03, wie in **Fig. 10** dargestellt, durch Antrieb der Förderpumpe 10 im Gärtank 02 durch eine Zirkulationsleitung 25 umgepumpt und durchmischt werden.

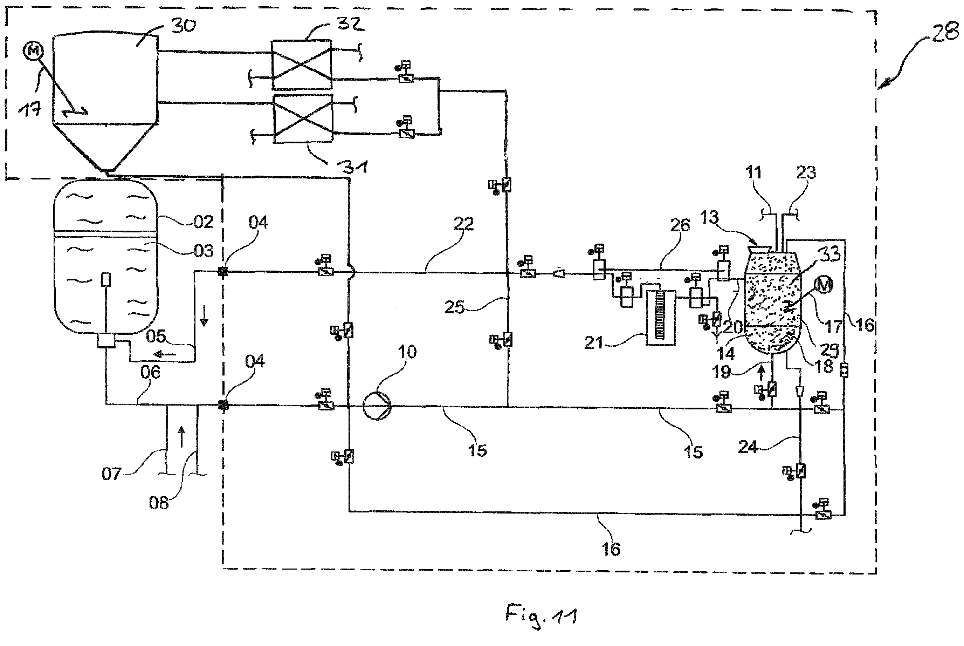

**Fig. 11** zeigt eine zweite Ausführungsform 28 zur Extraktion von Aromastoffen aus Hopfen und/oder Hopfenprodukten als pflanzliche Aromaträger. Die Vorrichtung 28 unterscheidet sich von der Vorrichtung 01 lediglich dahingehend, dass an dem Schwebebettextraktor 29 der Vorrichtung 28 anders als beim Schwebebettextraktor 09 kein Heizelement vorhanden ist. Stattdessen ist die Vorrichtung 28 zusätzlich mit einem Puffergefäß 30 ausgestattet, dem eine Heizeinrichtung 31 und eine Kühleinrichtung 32 vorgeschaltet sind. Die Heizeinrichtung 31 ist dabei in der Art eines Durchlauferhitzers ausgebildet, beispielsweise in der Art eines Plattenwärmetauschers, und kann mit Heißdampf oder Heißwasser beheizt werden. Die Erhitzung erfolgt dabei durch Wärmeübertragung ohne Vermischung des Heizmediums mit dem Prozessmedium. Die Kühleinrichtung 32 ist als Durchlaufkühler ausgebildet, wozu ebenfalls ein Plattenwärmetauscher verwendet werden kann. Dieser Plattenwärmetauscher kann durch Wärmeübergang auf Kaltwasser, insbesondere kaltes Brauwasser, gekühlt werden.

Der in **Fig. 11** dargestellte Prozesszustand der Vorrichtung 28 entspricht dem in **Fig. 7** dargestellten Prozesszustand der Vorrichtung 01. Das heißt, die Lösung der Aromastoffe aus den Aromaträgern durch Verwendung des Schwebebettextraktors 29 ist bereits abgeschlossen. Danach werden die Feststoffanteile durch Betrieb des Mischorgans 17 gleichmäßig in der Brauflüssigkeit verteilt.

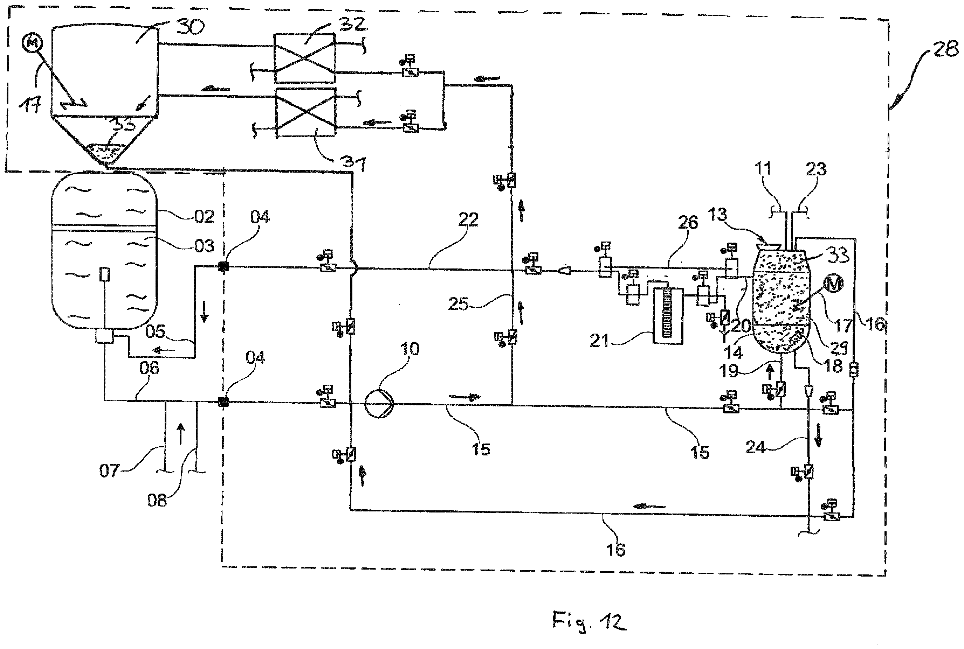

**Fig. 12** zeigt nun, wie die im Schwebebettextraktor 29 enthaltene Suspension 33 durch Antrieb der Pumpe 10 und durch geeignete Schaltung der Absperrventile in das Puffergefäß 30 übergepumpt wird. Die Suspension 33 durchläuft dabei die Heizeinrichtung 31 und wird erhitzt, wohingegen die Kühleinrichtung 32 abgesperrt ist.

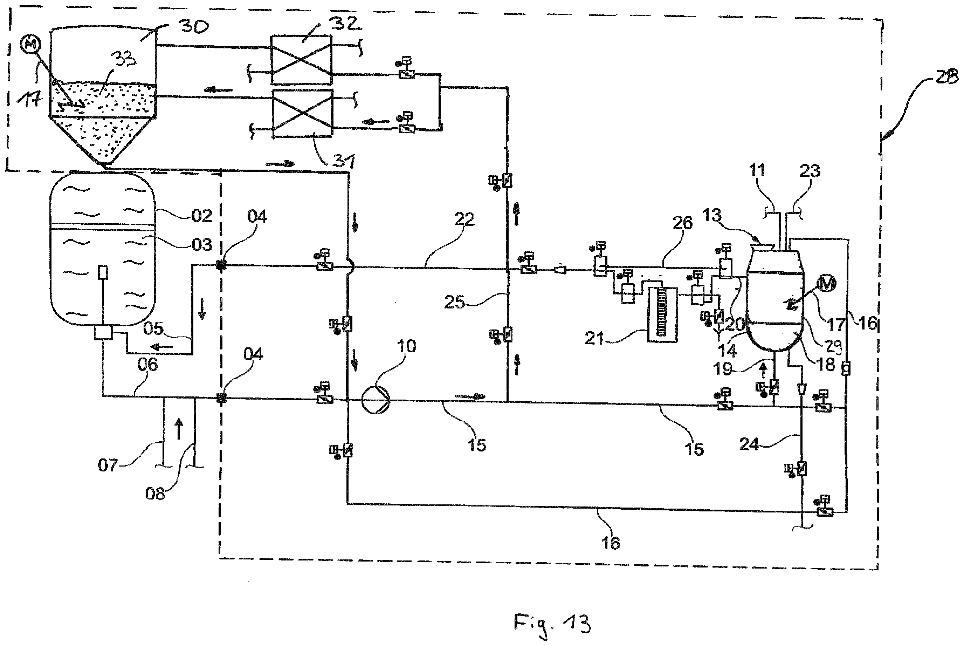

**Fig. 13** zeigt die Vorrichtung 28, nachdem der Schwebebettextraktor 29 vollständig entleert ist und sich die gesamte verbliebene Suspension 33 im Puffergefäß 30 befindet. Um nunmehr die Suspension 33 auf die gewünschte Isomerisierungstemperatur von beispielsweise 120° C zu erhitzen, wird die Suspension durch Antrieb der Pumpe 10 und durch geeignete Schaltung der Absperrventile im Kreislauf durch die Heizeinrichtung 31 durchgepumpt und dabei kontinuierlich erhitzt. Sobald die gewünschte Isomerisierungstemperatur von größer 120° C erreicht ist, wird diese für eine vorgegebene Isomerisierungsdauer von beispielsweise 20 Minuten aufrechterhalten. Um ein Verdampfen der in der Suspension 33 enthaltenen Wasseranteile zu verhindern, erfolgt die Isomerisierung im Puffergefäß 30 unter Überdruck.

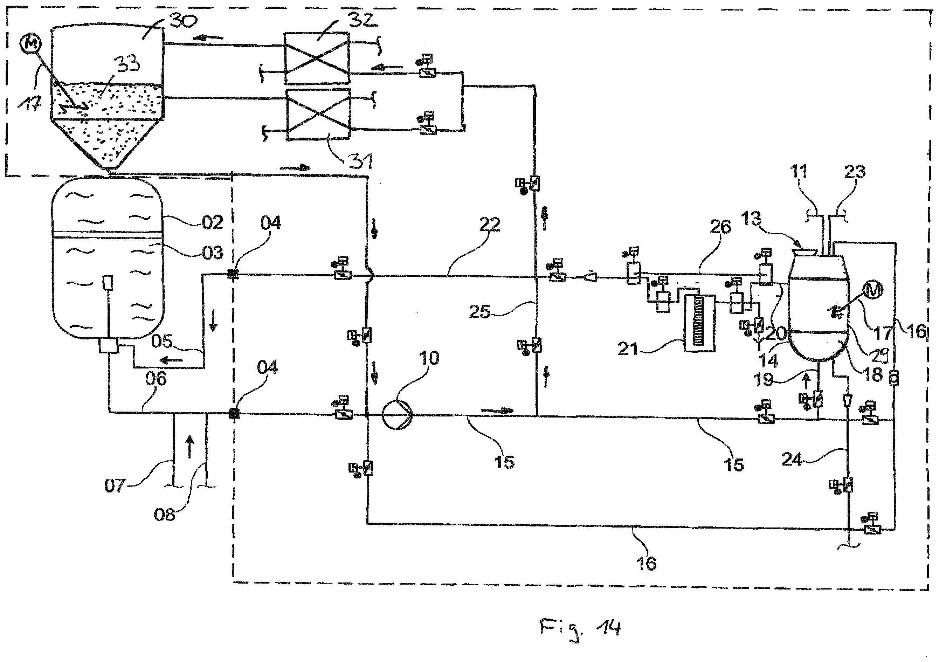

**Fig. 14** zeigt die Vorrichtung 28 nach Ablauf der vorgegebenen Isomerisierungsdauer von beispielsweise 20 Minuten bei 120° C. Um unerwünschte Unterprozesse durch eine noch längere Wärmebehandlung zu vermeiden, wird die Suspension dann, wie in Fig. 14 dargestellt, durch Betrieb der Pumpe 10 und geeignete Schaltung der Durchlaufventile durch die Kühleinrichtung 32 durchgepumpt und auf diese Weise rasch auf eine Kühltemperatur von beispielsweise 70° C abgekühlt, so dass eine weitere Isomerisierung nicht mehr erfolgt. Durch den in Fig. 11 bis

**Fig. 14** dargestellten Wärmebehandlungs- und Kühlprozess werden die in der Suspension 33 enthaltenen α-Säuren in für die Herstellung von Bier gewünschte Iso-α-Säuren umgesetzt. Nach Ende der in **Fig. 14** dargestellten Abkühlung der Suspension kann eine Abfilterung der in der Suspension befindlichen Feststoffe erfolgen, um die Brauflüssigkeit mit den darin enthaltenen Iso-α-Säuren geeignet weiterverwenden zu können. Für die Abfilterung der Feststoffe kann die Suspension beispielweise aus dem Puffergefäß 30 wieder in den Schwebebettextraktor 29 übergepumpt und dann die Filtrierung entsprechend der Vorgehensweise gemäß Fig. 8 durchgeführt werden. Aber auch andere Filtrationsverfahren zur Abfilterung der Feststoffe aus der in der Suspension 33 im Puffergefäß 30 enthaltenen Brauflüssigkeit sind selbstverständlich denkbar.

In beiden dargestellten Ausführungen der Erfindung wurde der isomerisierte Inhalt des Schwebebettextraktors bzw. des Puffergefäßes in den Gärtank geleitet. Natürlich kann der Inhalt auch in ein beliebiges Gefäß oder an einer beliebigen Stelle im Sudhausbereich (z.B. in die Würzepfanne) eingeleitet werden. Es kann also die Suspension auch alternativ oder additiv zur Hopfengabe bei der Würzebereitung verwendet werden. Auch die weitere Pufferung in einem weiteren Puffergefäß ist denkbar, da somit zeitliche Versätze zwischen Herstellung der isomerisierten Suspension und deren Verwendung besser abgepuffert werden können. Auch diese Verwendung im Sudhaus spart Kosten bei der Bitterstoffgabe bei der Bierbereitung.

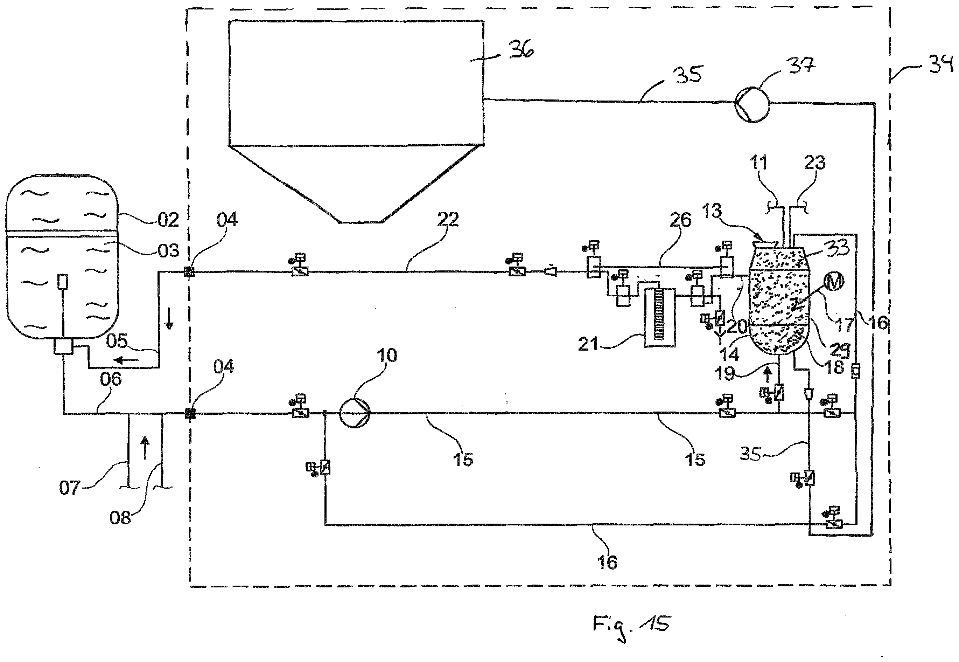

**Fig. 15** zeigt eine dritte Ausführungsform 34 zur Extraktion von Aromastoffen aus pflanzlichen Aromaträgern, nämlich aus Hopfen und/oder Hopfenprodukten. Die Vorrichtung 34 unterscheidet sich von der Vorrichtung 01 wiederum dahingehend, dass an dem Schwebebettextraktor 29 der Vorrichtung 34 anders als beim Schwebebettextraktor 09 kein Heizelement vorhanden ist. Stattdessen ist in der Vorrichtung 34 der Schwebebettextraktor 29 über eine Transferleitung 35 mit einem Sudhausgefäß 36 verbunden. Die Heizeinrichtungen des Sudhausgefäßes 36, in dem Würze gekocht wird, sind in Fig. 15 nicht dargestellt.

Der in **Fig. 15** dargestellte Prozesszustand der Vorrichtung 34 entspricht dem in **Fig. 7** dargestellten Prozesszustand der Vorrichtung 01. Das heißt, die Lösung der Aromastoffe aus den Aromaträgern durch Verwendung des Schwebebettextraktors 29 ist bereits abgeschlossen. Danach werden die Feststoffanteile durch Betrieb des Mischorgans 17 gleichmäßig in der Brauflüssigkeit verteilt.

Danach wird die im Schwebebettextraktor 29 enthaltene Suspension 33 durch Antrieb einer Pumpe 37 und durch geeignete Schaltung der Absperrventile in das Sudhausgefäß 36 übergepumpt und dort mit Würze gemischt, die noch gekocht werden muss. Die Suspension 33 wird dann bei der Würzekochung im Sudhausgefäß 36 erhitzt und isomerisiert.

## Patentansprüche

1. Vorrichtung (01, 28) zur Extraktion von Aromastoffen aus Hopfen und/oder Hopfenprodukten (12) in eine Brauflüssigkeit (03), insbesondere in Bier, mit einer Feststoff-Abscheidevorrichtung, mit der der Hopfen und/oder die Hopfenprodukte (12) von der Brauflüssigkeit im Durchfluss getrennt werden können, wobei die Feststoffe des Hopfens oder der Hopfenprodukte (12) in der Feststoff-Abscheidevorrichtung zurückgehalten werden,
**dadurch gekennzeichnet,**
**dass** die Vorrichtung (01, 28) eine Heizeinrichtung (27, 31) umfasst, mit der die Suspension aus Brauflüssigkeit (03) und Hopfen und/oder Hopfenprodukten (12) auf eine Isomerisierungstemperatur erhitzt werden kann, bei der die in den Aromaträgern enthaltenen α-Säuren in Iso-α-Säuren umgewandelt werden, und wobei die Vorrichtung (01, 28) eine Kühleinrichtung (32) zur Steuerung der Isomerisierung umfasst, mit der die Suspension aus Brauflüssigkeit (03) und Hopfen und/oder Hopfenprodukten (12) nach der Isomerisierung auf eine Kühltemperatur unterhalb der Isomerisierungstemperatur kühlbar ist.

2. Vorrichtung (01, 28) nach Anspruch 1,
**dadurch gekennzeichnet,**
**dass** die Feststoff-Abscheidevorrichtung in der Art eines Schwebebettextraktors (09, 29) ausgebildet ist, wobei der Schwebebettextraktor (09, 29) ein Suspensionsbett (18) aufnehmen kann, das aus der Brauflüssigkeit (03) und den in dem Hopfen und/oder den Hopfenprodukten (12) enthaltenen Feststoffpartikeln (12) gebildet ist, und wobei der Schwebebettextraktor (09, 29) zumindest einen Zulauf (19) und einen Auslauf (20) für die Brauflüssigkeit (03) aufweist, und wobei die Brauflüssigkeit (03) mit einer Förderpumpe (10) vom Zulauf (19) durch den Schwebebettextraktor (09, 29) zum Auslauf (20) gepumpt werden kann, und wobei die Fördergeschwindigkeit der Förderpumpe (10) auf einen Wert einstellbar ist, bei dem die durchschnittliche vertikale Fördergeschwindigkeit der Brauflüssigkeit (03) im Schwebebettextraktor (09, 29) kleiner ist als die durchschnittliche vertikale Sinkgeschwindigkeit der Feststoffpartikel im Schwebebettextraktor (09, 29).

3. Vorrichtung nach Anspruch 1 oder 2,
**dadurch gekennzeichnet,**
**dass** die Heizeinrichtung (27) in der Art eines Heizelements ausgebildet ist, wobei die im Schwebebettextraktor (09) enthaltene Suspension aus Brauflüssigkeit (03) und Hopfen und/oder Hopfenprodukten (12) mit dem Heizelement (27) erhitzt werden kann.

4. Vorrichtung nach Anspruch 1 oder 2,
**dadurch gekennzeichnet,**
**dass** die Vorrichtung (28) ein Puffergefäß (30) umfasst, in dem die Suspension aus Brauflüssigkeit (03) und Hopfen und/oder Hopfenprodukten (12) nach der Extraktion von Aromastoffen während der Isomerisierung erhitzt und/oder nach der Isomerisierung gekühlt werden kann.

5. Vorrichtung nach Anspruch 4,
**dadurch gekennzeichnet,**
**dass** die Heizeinrichtung (31) in der Art eines Durchlauferhitzers ausgebildet ist, wobei die Suspension bei der Erhitzung mit einer Pumpe (10) durch den Durchlauferhitzer (31) gepumpt und im Durchlauf erhitzt werden kann.

6. Vorrichtung nach einem der Ansprüche 1 bis 5,
**dadurch gekennzeichnet,**
**dass** die Kühleinrichtung in der Art eines Kühlelements ausgebildet ist, das am Schwebebettextraktor angebracht ist oder dass die Kühleinrichtung (32) in der Art eines Durchlaufkühlers ausgebildet ist, wobei die Suspension bei der Abkühlung mit einer Pumpe (10) durch den Durchlaufkühler gepumpt und im Durchlauf gekühlt werden kann.

7. Vorrichtung nach einem der Ansprüche 1 bis 6,
**dadurch gekennzeichnet,**
**dass** der Schwebebettextraktor (09) oder das Puffergefäß (30) als Druckgefäß ausgebildet ist, in dem die Suspension aus Brauflüssigkeit (03) und Hopfen und/oder Hopfenprodukten (12) unter Überdruck erhitzt werden kann.

8. Vorrichtung nach einem der Ansprüche 1 bis 7,
**dadurch gekennzeichnet,**
**dass** im Schwebebettextraktor (09) oder im Puffergefäß (30) ein Mischorgan (17) angeordnet ist, mit dem die Suspension aus Brauflüssigkeit (03) und Hopfen und/oder Hopfenprodukten (12) während der Isomerisierung zur Homogenisierung der Temperaturverteilung durchmischt werden kann.

9. Vorrichtung nach Anspruch 1 oder 2,
**dadurch gekennzeichnet,**
**dass** die Heizeinrichtung in der Art eines Sudhausgefäßes (36), insbesondere in der Art einer Würzepfanne, ausgebildet ist, wobei die Vorrichtung (34) eine Transferleitung (35) umfasst, in der die Suspension (33) aus Brauflüssigkeit (03) und Hopfen und/oder Hopfenprodukten (12) nach der Extraktion von Aromastoffen zumindest teilweise in das Sudhausgefäß (36) übergepumpt werden kann, wobei die Suspension (33) aus Brauflüssigkeit (03) und Hopfen und/oder Hopfenprodukten (12) im Sudhausgefäß (36) zur Isomerisierung zusammen mit Würze gekocht werden kann.

10. Verfahren zur Extraktion von Aromastoffen aus Hopfen und/oder Hopfenprodukten (12) in eine Brauflüssigkeit (03), mit folgenden Verfahrensschritten:
a) Bildung einer Suspension aus Brauflüssigkeit (03) und den in dem Hopfen und/oder den Hopfenprodukten (12) enthaltenen Feststoffen,
b) Förderung der Brauflüssigkeit (03) durch eine Feststoff-Abscheidevorrichtung, wobei der Hopfen und/oder die Hopfenprodukte (12) von der Brauflüssigkeit im Durchfluss getrennt werden und die Feststoffe des Hopfens und/oder der Hopfenprodukte (12) in der Feststoff-Abscheidevorrichtung zurückgehalten werden,
**dadurch gekennzeichnet,**
**dass** vor und/oder während und/oder nach Lösung der Aromastoffe in der Feststoff-Abscheidevorrichtung zumindest ein Teil der Suspension aus Brauflüssigkeit (03) und Hopfen und/oder Hopfenprodukten (12) auf eine Isomerisierungstemperatur erhitzt wird, bei der die in den Aromaträgern enthaltenen α-Säuren in Iso-α-Säuren umgewandelt werden, wobei die Suspension nach der Isomerisierung auf eine Kühltemperatur unterhalb der Isomerisierungstemperatur abgekühlt wird.

11. Verfahren nach Anspruch 10,
**gekennzeichnet durch** folgende Verfahrensschritte:
a) Bildung einer Suspension aus Brauflüssigkeit (03) und den in dem Hopfen und/oder den Hopfenprodukten (12) enthaltenen Feststoffen;
b) Bildung eines Suspensionsbetts (18) aus Brauflüssigkeit (03) und den in dem Hopfen und/oder den Hopfenprodukten (12) enthaltenen Feststoffen in einem Schwebebettextraktor;
c) Förderung der Brauflüssigkeit (03) **durch** den Schwebebettextraktor (09, 29) mit einer durchschnittlichen vertikalen Fördergeschwindigkeit, die kleiner ist als die durchschnittliche vertikale Sinkgeschwindigkeit der in dem Hopfen und/oder den Hopfenprodukten (12) enthaltenen Feststoffe, um die Aromastoffe aus den Feststoffen in die Brauflüssigkeit (03) zu lösen und die Feststoffe des Hopfens und/oder der Hopfenprodukte (12) von der Brauflüssigkeit (03) zu trennen;
**dadurch** gekennzeichnet,
dass vor und/oder während und/oder nach Lösung der Aromastoffe im Schwebebettextraktor zumindest ein Teil der Suspension aus Brauflüssigkeit (03) und Hopfen und/oder Hopfenprodukten (12) auf eine Isomerisierungstemperatur erhitzt wird, bei der die in den Aromaträgern enthaltenen α-Säuren in Iso-α-Säuren umgewandelt werden, wobei die Suspension nach der Isomerisierung auf eine Kühltemperatur unterhalb der Isomerisierungstemperatur abgekühlt wird.

12. Verfahren nach einem der Ansprüche 10 bis 11,
**dadurch gekennzeichnet,**
**dass** die Suspension während der Isomerisierung unter Überdruck auf eine Temperatur größer 100°C, insbesondere auf eine Temperatur größer 120°C, erhitzt wird.

13. Verfahren nach einem der Ansprüche 10 bis 12,
**dadurch gekennzeichnet,**
**dass** die nach ausreichender Lösung der Aromastoffe verbleibende Suspension (33) zumindest teilweise in ein Sudhausgefäß (36), insbesondere in eine Würzepfanne, übergepumpt wird, wobei die Suspension (33) aus Brauflüssigkeit (03) und Hopfen und/oder Hopfenprodukten (12) in dem Sudhausgefäß (36) zur Isomerisierung zusammen mit Würze gekocht wird.

## Claims

1. A device (01, 28) for extracting aroma substances from hop and/or hop products (12) into a brewing liquid (03), in particular into beer, the device (01, 28) comprising a solids separating device by means of which the hop and/or the hop products (12) can be separated from the brewing liquid in flow, the solids of the hop or the hop products (12) being held back in the solids separating device,
**characterized in that**
the device (01, 28) comprises a heater (27, 31) by means of which the suspension of brewing liquid (03) and hop and/or hop products (12) can be heated to an isomerization temperature at which the α-acids contained in the aroma carriers are converted into iso-α-acids, and wherein the device (01, 28) comprises a cooler (32) for controlling the isomerization, the cooler (32) being configured to cool the suspension of brewing liquid (03) and hop and/or hop products (12) to a cooling temperature below the isomerization temperature after isomerization.

2. The device (01, 28) according to claim 1,
**characterized in that**
the solids separating device is realized in the manner of a fluidized bed extractor (09, 29), said fluidized bed extractor (09, 29) being able to accommodate a suspension bed (18) that is composed of the brewing liquid (03) and of the solid particles (12) contained in the hop and/or in the hop products (12), and the fluidized bed extractor (09, 29) having at least one inlet (19) and one outlet (20) for the brewing liquid (03), and wherein the brewing liquid (03) can be pumped from the inlet (19) through the fluidized bed extractor (09, 29) to the outlet (20) by means of a feed pump (10), and wherein the feeding speed of the feed pump (10) can be set to a value at which the average vertical feeding speed of the brewing liquid (03) in the fluidized bed extractor (09, 29) is lower than the average vertical sedimentation speed of the solid particles in the fluidized bed extractor (09, 29).

3. The device according to claim 1 or 2,
**characterized in that**
the heater (27) is realized in the manner of a heating element, wherein the suspension of brewing liquid (03) and hop and/or hop products (12) contained in the fluidized bed extractor (09) can be heated using the heating element (27).

4. The device according to claim 1 or 2,
**characterized in that**
the device (28) comprises a buffer vessel (30) in which the suspension of brewing liquid (03) and hop and/or hop products (12) can be heated during isomerization and/or cooled after isomerization once the aroma substances have been extracted.

5. The device according to claim 4,
**characterized in that**
the heater (31) is realized in the manner of a flow heater, wherein the suspension can be pumped through the flow heater (31) during heating using a pump (10) and can be heated in flow.

6. The device according to any one of claims 1 to 5,
**characterized in that**
the cooler is realized in the manner of a cooling element which is installed on the fluidized bed extractor, or **in that** the cooler (32) is realized in the manner of a flow cooler, wherein the suspension can be pumped through the flow cooler during cooling using a pump (10) and can be cooled in flow.

7. The device according to any one of claims 1 to 6,
**characterized in that**
the fluidized bed extractor (09) or the buffer vessel (30) is realized as a pressure vessel in which the suspension of brewing liquid (03) and hop and/or hop products (12) can be heated under pressure.

8. The device according to any one of claims 1 to 7,
**characterized in that**
a mixing element (17), by means of which the suspension of brewing liquid (03) and hop and/or hop products (12) can be mixed during isomerization in order to homogenize the temperature distribution, is disposed in the fluidized bed extractor (09) or in the buffer vessel (30).

9. The device according to claim 1 or 2,
**characterized in that**
the heater is realized in the manner of a brewhouse vessel (36), in particular in the manner of a wort kettle, the device (34) comprising a transfer line (35) in which at least part of the suspension (33) of brewing liquid (03) and hop and/or hop products (12) can be pumped into the brewhouse vessel (36) after the extraction of aroma substances, wherein the suspension (33) of brewing liquid (03) and hop and/or hop products (12) can be boiled in the brewhouse vessel (36) together with wort for isomerization.

10. A method for extracting aroma substances from hop and/or hop products (12) into a brewing liquid (03), the method comprising the following method steps:
a) forming a suspension of the brewing liquid (03) and of the solids contained in the hop and/or in the hop products (12);
b) feeding the brewing liquid (03) through a solids separating device, the hop and/or the hop products (12) being separated from the brewing liquid in flow and the solids of the hop and/or hop products (12) being held back in the solids separating device, **characterized in that**
prior to and/or during and/or after release of the aroma substances in the solids separating device, at least part of the suspension of brewing liquid (03) and hop and/or hop products (12) is heated to an isomerization temperature at which the α-acids contained in the aroma carriers are converted into iso-α-acids, wherein, after isomerization, the suspension is cooled to a cooling temperature below the isomerization temperature.

11. The method according to claim 10,
**characterized by** the following method steps:
a) forming a suspension of the brewing liquid (03) and of the solids contained in the hop and/or in the hop products (12);
b) forming a suspension bed (18) of the brewing liquid (03) and of the solids contained in the hop and/or in the hop products (12) in a fluidized bed extractor;
c) feeding the brewing liquid (03) through the fluidized bed extractor (09, 29) at an average vertical feeding speed that is lower than the average vertical sedimentation speed of the solids contained in the hop and/or in the hop products (12) so as to release the aroma substances from the solids into the brewing liquid (03) and to separate the solids of the hop and/or the hop products (12) from the brewing liquid (03);
**characterized in that**
prior to and/or during and/or after release of the aroma substances in the fluidized bed extractor, at least part of the suspension of brewing liquid (03) and hop and/or hop products (12) is heated to an isomerization temperature at which the α-acids contained in the aroma carriers are converted into iso-α-acids, wherein, after isomerization, the suspension is cooled to a cooling temperature below the isomerization temperature.

12. The method according to any one of claims 10 to 11, **characterized in that**
during isomerization, the suspension is heated under pressure to a temperature greater than 100 °C, in particular to a temperature greater than 120 °C.

13. The method according to any one of claims 10 to 12, **characterized in that**
at least part of the suspension (33) remaining after sufficient release of the aroma substances is pumped into a brewhouse vessel (36), in particular into a wort kettle, the suspension (33) of brewing liquid (03) and hop and/or hop products (12) being boiled in the brewhouse vessel (36) together with wort for isomerization.

## Revendications

1. Dispositif (01, 28) d'extraction de substances aromatiques de houblon et/ou de produits de houblon (12) dans un liquide de brassage (03), notamment dans du bière, le dispositif (01, 28) comprenant un dispositif de séparation de matière solide configuré pour séparer le houblon et/ou les produits de houblon (12) du liquide de brassage en continu, la matière solide du houblon ou des produits de houblon (12) étant retenue dans le dispositif de séparation de matière solide,
**caractérisé en ce que**
le dispositif (01, 28) comprend un dispositif de chauffage (27, 31) configuré pour chauffer la suspension de liquide de brassage (03) et de houblon et/ou de produits de houblon (12) à une température d'isomérisation à laquelle les acides α contenus dans les supports d'arôme sont convertis en acides iso-α, le dispositif (01, 28) comprenant un dispositif de refroidissement (32) pour contrôler l'isomérisation, le dispositif de refroidissement (32) étant configuré pour refroidir la suspension de liquide de brassage (03) et de houblon et/ou de produits de houblon (12) à une température de refroidissement inférieure à la température d'isomérisation après l'isomérisation.

2. Dispositif (01, 28) selon la revendication 1,
**caractérisé en ce que**
le dispositif de séparation de matière solide est en forme d'un extracteur à lit fluidisé (09, 29), l'extracteur à lit fluidisé (09, 29) étant configuré pour loger un lit de suspension (18) qui est composé par le liquide de brassage (03) et par les particules solides (12) contenues dans le houblon et/ou dans les produits de houblon (12), et l'extracteur à lit fluidisé (09, 29) ayant ou moins une entrée (19) et une sortie (20) pour le liquide de brassage (03), et le liquide de brassage (03) pouvant être pompé de l'entrée (19) au travers de l'extracteur à lit fluidisé (09, 29) à la sortie (20) au moyens d'une pompe d'transport (10), et la vitesse de transport de la pompe d'transport (10) pouvant être réglée à une valeur à laquelle la vitesse de transport verticale moyenne du liquide de brassage (03) dans l'extracteur à lit fluidisé (09, 29) est inférieure à la vitesse de sédimentation verticale moyenne des particules solides dans l'extracteur à lit fluidisé (09, 29).

3. Dispositif selon la revendication 1 ou 2,
**caractérisé en ce que**
le dispositif de chauffage (27) est en forme d'un élément de chauffage, et l'élément de chauffage (27) étant configuré pour chauffer la suspension de liquide de brassage (03) et de houblon et/ou de produits de houblon (12) contenue dans l'extracteur à lit fluidisé (09).

4. Dispositif selon la revendication 1 ou 2,
**caractérisé en ce que**
le dispositif (28) comprend un réservoir tampon (30) dans lequel la suspension de liquide de brassage (03) et de houblon et/ou de produits de houblon (12) peut être chauffée pendant l'isomérisation et/ou refroidie après l'isomérisation après que les substances aromatiques ont été extraites.

5. Dispositif selon la revendication 4,
**caractérisé en ce que**
le dispositif de chauffage (31) est en forme d'un chauffe-eau instantané, la suspension pouvant être pompée au travers du chauffe-eau instantané (31) par une pompe (10) pendant le chauffage et pouvant être chauffée en continu.

6. Dispositif selon l'une quelconque des revendications 1 à 5, **caractérisé en ce que**
le dispositif de refroidissement est en forme d'un élément de refroidissement qui est attaché à l'extracteur à lit fluidisé, ou le dispositif de refroidissement (32) est en forme d'un refroidisseur instantané, la suspension pouvant être pompée au travers du refroidisseur instantané pendant le refroidissement par une pompe (10) et pouvant être refroidie en continu.

7. Dispositif selon l'une quelconque des revendications 1 à 6, **caractérisé en ce que**
l'extracteur à lit fluidisé (09) ou le réservoir tampon (30) est un réservoir sous pression dans lequel la suspension de liquide de brassage (03) et de houblon et/ou de produits de houblon (12) peut être chauffée sous pression.

8. Dispositif selon l'une quelconque des revendications 1 à 7, **caractérisé en ce**
**qu'**un organe mélangeur (17) est disposé dans l'extracteur à lit fluidisé (09) ou dans le réservoir tampon (30), l'organe mélangeur (17) étant configuré pour mélanger la suspension de liquide de brassage (03) et de houblon et/ou de produits de houblon (12) pendant l'isomérisation afin d'homogénéiser la distribution de température.

9. Dispositif selon la revendication 1 ou 2,
**caractérisé en ce que**
le dispositif de chauffage est en forme d'un réservoir de salle de brassage (36), notamment en forme d'une chaudière à moût, le dispositif (34) comprenant un tuyau de transfert (35) dans lequel au moins une partie de la suspension (33) de liquide de brassage (03) et de houblon et/ou de produits de houblon (12) peut être pompée dans le réservoir de salle de brassage (36) après l'extraction de substances aromatiques, la suspension (33) de liquide de brassage (03) et de houblon et/ou de produits de houblon (12) pouvant être bouillie dans le réservoir de salle de brassage (36) conjointement avec du moût pour l'isomérisation.

10. Procédé d'extraction de substances aromatiques de houblon et/ou de produits de houblon (12) dans un liquide de brassage (03), le procédé comprenant les étapes suivantes :
a) produire une suspension du liquide de brassage (03) et de la matière solide contenue dans le houblon et/ou dans les produits de houblon (12) ;
b) transporter le liquide de brassage (03) au travers d'un dispositif de séparation de matière solide, le houblon et/ou les produits de houblon (12) étant séparés du liquide de brassage en continu et la matière solide du houblon et/ou des produits de houblon (12) étant retenue dans le dispositif de séparation de matière solide, **caractérisé en ce**
**qu'**avant et/ou pendant et/ou après la libération des substances aromatiques dans le dispositif de séparation de matière solide, au moins une partie de la suspension de liquide de brassage (03) et de houblon et/ou de produits de houblon (12) est chauffée à une température d'isomérisation à laquelle les acides α contenus dans les supports d'arôme sont convertis en acides iso-α, la suspension étant refroidie à une température de refroidissement inférieure à la température d'isomérisation après l'isomérisation.

11. Procédé selon la revendication 10,
**caractérisé par** les étapes suivantes :
a) produire une suspension du liquide de brassage (03) et de la matière solide contenue dans le houblon et/ou dans les produits de houblon (12) ;
b) former un lit de suspension (18) du liquide de brassage (03) et de la matière solide contenue dans le houblon et/ou dans les produits de houblon (12) dans un extracteur à lit fluidisé ;
c) transporter le liquide de brassage (03) au travers de l'extracteur à lit fluidisé (09, 29) à une vitesse de transport verticale moyenne qui est inférieure à la vitesse de sédimentation verticale moyenne de la matière solide contenue dans le houblon et/ou dans les produits de houblon (12) afin de libérer les substances aromatiques de la matière solide dans le liquide de brassage (03) et séparer la matière solide du houblon et/ou des produits de houblon (12) du liquide de brassage (03) ;
**caractérisé en ce que**
qu'avant et/ou pendant et/ou après la libération des substances aromatiques dans l'extracteur à lit fluidisé, au moins une partie de la suspension de liquide de brassage (03) et de houblon et/ou de produits de houblon (12) est chauffée à une température d'isomérisation à laquelle les acides α contenus dans les supports d'arôme sont convertis en acides iso-α, la suspension étant refroidie à une température de refroidissement inférieure à la température d'isomérisation après l'isomérisation.

12. Procédé selon l'une quelconque des revendications 10 à 11, **caractérisé en ce que**
la suspension est chauffée sous pression à une température supérieure à 100 °C, notamment à une température supérieure à 120 °C, pendant l'isomérisation.

13. Procédé selon l'une quelconque des revendications 10 à 12, **caractérisé en ce**
**qu'**au moins une partie de la suspension (33) restant après la libération suffisante des substances aromatiques est pompée dans un réservoir de salle de brassage (36), notamment dans une chaudière à moût, la suspension (33) de liquide de brassage (03) et de houblon et/ou de produits de houblon (12) étant bouillée dans le réservoir de salle de brassage (36) conjointement avec du moût pour l'isomérisation.
